# EUROPÄISCHE PATENTANMELDUNG

(11) **EP 4 181 462 A1**
(43) Veröffentlichungstag der Anmeldung: **17.05.2023**
(21) Anmeldenummer: 21207789.5
(22) Anmeldetag: 11.11.2021
(51) Int. Cl.: H04L 9/40, H04L 9/32, H04L 67/12, H04L 67/303

(54) **VERFAHREN FÜR EIN ZERTIFIKATSMANAGEMENT FÜR HETEROGENE ANLAGEN, COMPUTERSYSTEM UND COMPUTERPROGRAMMPRODUKT**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Die Konfiguration der Registration Authority RA wird durch eine (dynamisch) konfigurierbare neue Prüfungsregel, Device ID Profile zu ergänzen und bei der Aufnahme einer Anlagenkomponente in das Verzeichnis / Inventory dieser Komponente eine bereits konfigurierte neue Prüfungsregel, Device ID Profile vollautomatisiert oder manuell durch den zuständigen Benutzer (anhand einer Entscheidung/Vorgabe, gemäß der Benutzer handelt) zugewiesen.

Die die vorkonfigurierten oder zur Laufzeit dynamisch konfigurierten Prüfungsregeln, Device ID Profile werden bei der Validierung der Zertifikatsanträge berücksichtigt. Bei der Validierung eines Zertifikatsantrags, den die Registration Authority RA von einer Anlagenkomponente erhalten hat, bestimmt die Registration Authority RA anhand des dieser Anlagenkomponente zugeordneten neue Prüfungsregel Device ID Profils, an welcher Stelle sie diese neue Prüfungsregel Device ID im Verzeichnis / Inventory suchen muss und wie sie diese gegebenenfalls aus mehreren Bestandteilen (z. B. der Seriennummer und der MLFB) zusammensetzen muss. Das beschriebene Problem wird dadurch gelöst, indem die Registration Authority RA dazu befähigt wird, bei der Validierung der Zertifikatseinträge in einer heterogenen industriellen Anlage verschiedene neue Prüfungsregeln Device IDs zu behandeln.

## Beschreibung

Die zunehmende Verwendung von offenen IT-Standards und Protokollen sowie die Anforderungen der IEC 62443 ("Industrial communication networks - IT security for networks and systems") als des führenden Industrial Security Standards führt auch in der industriellen Umgebung zu steigendem Schutzbedarf. Die müssen Kommunikationsverbindungen in Leitsystemen technischer Anlagen zunehmend abgesichert, d.h. gegen unberechtigte Zugriffe angemessen geschützt werden.

Ein angemessener Schutz wird zumeist die Verschlüsselung und/ oder die Authentifizierung der übertragenen Daten umfassen. Entsprechende Verschlüsselungs- und Authentifizierungsmechanismen sind in der Regel ein Bestandteil sicherer Kommunikationsprotokolle (wie z. B. TLS, OPC UA). Der Einsatz sicherer Kommunikationsprotokolle setzt dabei zwingend voraus, dass die Kommunikationsteilnehmer über aktuelle digitale Zertifikate verfügen.

Die Zertifikate, die in einer operativen Umgebung (wie in der oben bereits erwähnten industriellen Anlage) eingesetzt werden, um beispielsweise sichere Kommunikation oder Benutzerauthentifizierung zu ermöglichen, werden im Folgenden als sogenannte "Operative Zertifikate" (engl. Operational Certificates, OC) bezeichnet. Aus Security-Gründen ist es empfehlenswert, ein dediziertes operatives Zertifikat pro verwendetes Kommunikationsprotokoll zu nutzen.

Je nach Rolle diverser Komponenten einer industriellen (d. h. einer verfahrenstechnischen oder einer diskreten) Anlage und je nach verwendeten Kommunikationsprotokoll sind in der Regel pro Komponente eine Vielzahl von Zertifikaten mit verschiedenen Schlüsselverwendungszwecken (engl. "Key Usages") für den Betrieb notwendig - z. B.:
- OPC UA-Zertifikate für die Kommunikation mit einem Fremdsystem mit OPC UA,
- TLS-Zertifikate für das Bedienen und Beobachten via Web (HTTPS), oder
- TLS-Zertifikate für eine sichere Übertragung der Loginformationen und Security-Events an eine zentrale Instanz (per Secure Syslog nach RFC 5425).

Mit einer steigenden Anzahl von Anlagenkomponenten, die in sichere Kommunikationsbeziehungen involviert sind und Zertifikate benötigen, ist es sinnvoll, das Ausstellen von operativen Zertifikaten - basierend auf den von den Anlagenkomponenten generierten Zertifikatsanträgen (engl. Certificate Requests, CR) - sowie die Zuweisung der ausgestellten Zertifikate den Komponenten zu automatisieren. Ein derartiges automatisiertes Zertifikatsmanagement setzt in der Regel eine sog. Public Key Infrastruktur (PKI) voraus, die in der jeweiligen operativen Umgebung (z. B. einer industriellen Anlage) vorhanden sein soll. Mit Public-Key-Infrastruktur (PKI) bezeichnet man in der Kryptologie ein System, das digitale Zertifikate ausstellen, verteilen und prüfen kann. Die innerhalb einer PKI ausgestellten Zertifikate werden zur Absicherung rechnergestützter Kommunikation verwendet.

Die Beantragung von fehlenden, sowie die Revokation von nicht mehr benötigten Zertifikaten erfolgt in der Regel über eine Registration Authority (RA), die die Rolle eines intelligenten Gateways spielt. Dabei prüft die Registration Authority RA, ob die eingehenden Zertifikats- und/oder Revokationsanträge korrekt sind und ob sie von legitimen, vertrauenswürdigen Anlagenkomponenten - d. h. je nach dem vorliegenden Zertifikatsmanagementszenario (wie z. B. "Bootstrapping", d. h. Schaffen einer Grundlage für eine PKI-Umgebung, einschließlich der Zertifizierungsstellen CA und Beauftragten, muss nach einer neuen Systeminstallation durchgeführt werden, bevor das System für die Produktion von Zertifikaten verwendet werden kann, sowie "Update", "Revocation") unter Verwendung der jeweiligen Herstellergerätezertifikate (Manufacturer Device Certificate, MDC), Kundengerätezertifikate (Customer Device Certificate CDC) oder deren operativen Zertifikate (OC) - signiert sind, die im Zertifikats-Verzeichnis, dem sogenannten "Inventory" der Anlage aufgelistet sind. Stellt die Registration Authority RA bei der Prüfung eines Antrags fest, dass der Antrag nicht korrekt ist oder dass der Antragsteller ihr nicht direkt bekannt ist und über eine nicht vertrauenswürdige LRA seinen Antrag eingereicht hat, so lehnt sie den Antrag ab. Somit bekommt der jeweilige Antragsteller nicht die beantragten Zertifikate und/oder sein Revokationsantrag wird nicht an die zuständige Certification Authority CA weitergeleitet.

Nach den aktuellen Konzepten können die Anlagenkomponenten beispielsweise manuell von einem Benutzer (der ihre Vertrauenswürdigkeit auf eine bestimmte Art und Weise geprüft hat) in das Verzeichnis / Inventory aufgenommen werden, indem der Benutzer eine Eingabe-Maske manuell oder mit Hilfe eines Skriptes ausfüllt

### <Eingabemaske Beispiel>

| | |
|---|---|
| Name: | SIMATIC S7-1500CPU1 |
| Device Identifier: | 64eeexxx |
| Manufacturer: | Siemens AG |
| Man. Device Certificate: | MDC_1500.cer |
| LastPoO: | |
| Additional Customer | |
| Device Certificate: | |
| Customer Device Certificate: | |
| Local Registration Authority | |

Dabei ist zu beachten, dass einige Angaben in der Maske in der Regel eher optional sind (siehe dazu beispielsweise die vier unteren Zeilen), während andere Angaben (insbesondere der Gerätename, der Herstellername und der Device Identifier verbindlich sind, denn sie werden für die eindeutige Identifizierung der Anlagenkomponenten benötigt.

Alternativ zur manuellen Aufnahme können Anlagenkomponenten nach einer erfolgreichen Originalitätsprüfung (engl. Proof of Originality), beispielsweise im Rahmen der Provisionierung, automatisiert in das Verzeichnis / Inventory der Anlage aufgenommen werden.

Dabei kann das Verzeichnis / Inventory durch eine in die Registration Authority RA integrierte oder dedizierte Komponente wie beispielsweise eine Liste oder eine Datenbank repräsentiert werden.

Der einer Anlagenkomponente entsprechende Verzeichnis / Inventory-Eintrag beinhaltet nach den aktuellen Konzepten in der Regel beispielsweise folgende Bestandteile:
- Name (Gerätename und/oder der im Anlagenkontext vergebene Name)
- Name des Herstellers
- Gerätenummer, Device ID (wie z. B. die Seriennummer der Anlagenkomponente oder eine Product Instance URI, Uniform Resource Identifier)
- Zeitpunkt der Originalitätsprüfung (optional)
- Herstellergerätezertifikat (engl. Manufacturer Device Certificate, MDC)
- Kundengerätezertifikat (engl. Customer Device Certificate, CDC)
- Lokale Registrierungsbehörde, (engl. Local Registration Authority, LRA) über die Anlagenkomponenten, die die Registration Authority RA netzwerktechnisch nicht direkt erreichen können, um ihre Zertifikatsanträge bzw. Revokationsanträge an die RA übermitteln
- Kundengeräts-Zertifikate (engl. Customer Device Certificates, CDC), die zuletzt ausgestellt wurden
- Operative Zertifikate (engl. Operation Certificates, OC), die zuletzt ausgestellt wurden.

Im Folgenden ist dazu beispielhaft ein Verzeichnis / Inventory dargestellt:

| N r | Geräte Name | Hersteller | Seriennummer | MLFB | URI | MDC | CD C | O C |
|---|---|---|---|---|---|---|---|---|
| 1 | Simatic S7-1500 | Siemens AG | 875gcb896 5 | 6ES7144 -1FB31--OXBO-Z | 234t56z 88 | 12345... | | |
| 2 | Simatic S7-4100 | Siemens AG | 975-g987621 | 9743214 4-1FB31-OXBO-Z | - | 98765.... | | |
| 3 | Cisco Device | Cisco | 87634gtz9 86 | | - | ... (confirmed) | | |
| 4 | IoT Device | XYZ | tzq9845 | | - | oooooo | | |
| 5 | Switc h | ABC | tzq9845 | | - | iiiiiii | | |

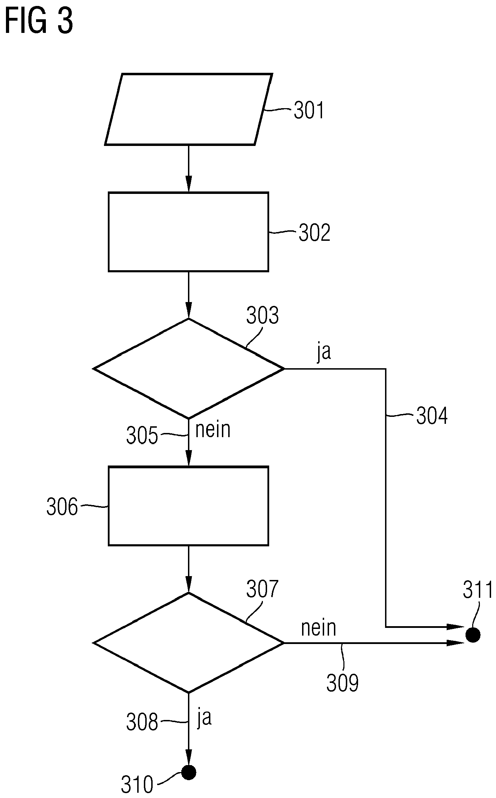

Siehe dazu auch die beispielhafte Darstellung des Validierungsablaufs in Figur 3.

Das auf beschriebene Art und Weise angelegte / aufgebaute Verzeichnis / Inventory wird im Anlagenkontext unter anderem von der Registration Authority RA bei der Validierung der eingehenden Zertifikats- und Revokationsanträge benutzt. Insbesondere bei der initialen Beantragung der Kundenzertifikate 301 (engl. Customer Device Certificates, CDC), die die Anlagenkomponenten an die Anlage binden sollen und die Basis für die Beantragung weiterer applikationsspezifischer Zertifikate (Operational Certificates, OC) bilden sollen, prüft die Registration Authority RA, ob der eingehende Zertifikatsantrag von einer Komponente kommt, die im Verzeichnis / Inventory bereits enthalten ist und die somit bereits auf eine adäquate Art und Weise geprüft wurde und Zertifikate im Kontext der Anlage beantragen darf, 302.

Zusätzlich validiert die Registration Authority RA die Signatur des Zertifikatsantrags unter Verwendung des zum Signieren verwendeten Signing Certificate, dessen Rolle bei der CDC-Beantragung in der Regel das zugehörige Manufacturer Device Certificate, MDC, spielt. Bei der Prüfung in Rücksprache mit dem Verzeichnis / Inventory berücksichtigt die Registration Authority RA insbesondere die sogenannte Device ID, die sowohl im entsprechenden Verzeichnis / Inventory-Eintrag als auch im Zertifikatseintrag und in dem zum Signieren des Eintrags verwendeten (und ebenfalls im Verzeichnis / Inventory-Eintrag enthaltenen) Zertifikats (z.B. Manufacturer Device Certificate (MDC)) enthalten ist.

Wenn der Zertifikatsantrag nicht zum Signing Certificate (z. B. MDC) passt, 304, dann ist die Validierung fehlgeschlagen, 311. Anderenfalls, 305, wird der Inventory Eintrag mit der Seriennummer, die im Zertifikatsantrag / Signing Certificate enthalten ist, gesucht, 306. Die Validierung ist erfolgreich, 310, wenn der entsprechende Eintrag gefunden wurde, 308. Anderenfalls, 309, ist die Validierung ebenfalls fehlgeschlagen.

Das der vorliegenden Erfindung zugrundeliegende Problem ist darauf zurückzuführen, dass es derzeit mehrere bzw. unterschiedliche hersteller- und protokollspezifische Vorgaben bzw. Festlegungen hinsichtlich der Device ID gibt.

Beispielsweise soll nach dem Standard IEEE 802.1AR ("Secure Device Identity") die Seriennummer der Geräte diese Rolle übernehmen. In diesem Zusammenhang wurde jedoch festgestellt, dass es vorkommen kann, dass die Seriennummer der Geräte für manche Hersteller (z. B. Siemens) werksübergreifend nicht eineindeutig ist. Um Kollisionen vorzubeugen, wurde für einige Geräte die Vorgabe erstellt, die Seriennummer des jeweiligen Gerätes mit der MLFB (Maschinen-Lesbare Fabrikate-Bezeichnung, Machine-readable Product Designation) des Gerätes zu verknüpfen bzw. zu konkatenieren, damit sich dadurch eine eindeutige Gerätenummer / Device ID ergibt. Gleichzeitig wird in der OPC UA Specification, Teil 21, die allerdings nur für OPC UA-Geräte gilt, gefordert, dass die "Product Instance URI" als eine eindeutige Gerätenummer / Device ID betrachtet werden soll. Somit ist in einem MDC, dessen Inhalte nach der OPC UA Specification Teil 21, gestaltet sind, einerseits die Seriennummer (als Bestandteil des "Subject") und andererseits die "Product Instance URI" als Wert des Parameters Subject Alternate Name (SAN) enthalten. Siehe dazu die **folgende Tabelle:** (die Angaben in der ersten Spalte sind zum Teil englische Fachbegriffe und daher für die bessere Verständlichkeit für den Fachmann nicht ins Deutsche übertragen):

| Field | Typ gemäß OPC UA Part 21 |
|---|---|
| Version | 3 |
| Seriennummer / Serial Number | [positive ganze Zahl von bis zu 20 Oktetten] eindeutig im Geltungsbereich der ausstellenden CA |
| Signatur Algorithmus | RSA-2048/SHA-256, ECDSA P-256/SHA-256 or ECDSA P-384/SHA-384 |
| Ausgabestelle | Subject Distinguished Name of Issuing CA |
| Gültigkeit | auf unbestimmte Zeit in die Zukunft (sollte den Wert GeneralizedTime verwenden, 99991231235959Z) |
| Subject | Distinguished Name serialNumber = [Produkt Serien Nummer] eindeutig in der Domäne der Ausgabeinstanz |
| Subject Public Key Info | [Algorithmus für Public Key], [Public Key] |
| Authority Key Identifier | [Kennung der Schlüssel der ausgebenden CA] |

| Subject Key Identifier | Nicht empfohlen / soll nicht genutzt werden |
|---|---|
| Key Usage (critical) | digitalSignature |
| | keyEncipherment (optional) |
| | als kritisch markiert |
| Subject Alt Name | Uri = ProductlnstanceUri |
| Basic Constraints | "die Erweiterung kann als kritische oder unkritische Erweiterung in Endteilnehmerzertifikaten erscheinen", RFC 5280 |

Folglich liegt das der vorliegenden Erfindung zugrundeliegende Problem darin, dass sich in einer heterogenen Anlage aufgrund der verschiedenen (sich ggf. auch noch dynamisch verändernder) Vorgaben und Festlegungen hinsichtlich der Gerätenummer Device ID kein einheitlicher Ablauf zur Validierung von Zertifikatsanträgen definieren lässt. Beispielsweise trifft der in der Figur 3 veranschaulichte Ablauf nur für die Geräte/Hersteller zu, die die Seriennummer der Geräte als eine Geräte ID verwenden, wobei sie aus dem sog. "Subject" ausgelesen wird. Für OPC UA-Geräte müsste der Ablauf im Prinzip angepasst werden, indem - anstelle der im "Subject" enthaltenen Seriennummer die unter "SAN" enthaltene Product Instance URI als Device ID zum Einsatz kommt. Findet jedoch im Kontext einer bestimmten Anlage noch keine Auswertung der Product Instance URI statt, wird auch für die OPC UA-Geräte die Seriennummer, die mit der MLFB verknüpfte Seriennummer oder eine auf eine andere Art und Weise gebildete Device ID verwendet. Manchmal können sich die entsprechenden Vorgaben und Festlegungen dynamisch ändern, was vollautomatisiert und/oder vom Benutzer (beispielsweise durch dessen entsprechende manuelle Eingaben) beeinflusst werden kann.

Es ist daher Aufgabe der Erfindung, ein System und ein Verfahren anzugeben, welches die oben beschriebenen Probleme löst.

Diese Aufgabe wird gelöst durch die Merkmale der unabhängigen Patentansprüche.

Die Aufgabe wird gelöst durch ein Verfahren gemäß den Merkmalen des Patentanspruchs 1, durch ein System gemäß den Merkmalen des Patentanspruchs 8 und durch ein Computerprogrammprodukt gemäß den Merkmalen des Patentanspruchs 10.

Das erfindungsgemäße Verfahren bietet ein Zertifikatsmanagement für heterogene Anlagen, wobei die Anlage aus zumindest zwei Komponenten besteht und eine Zertifikatsverwaltung Informationen über die Komponenten in einem Verzeichnis speichert.

Die Zertifikatsverwaltung erhält von jeder Komponente einen Antrag auf ein Zertifikat für den Betrieb und/oder die Kommunikation, und entscheidet nach Prüfung des Antrages, ob dieses Zertifikat erteilt oder bestätigt werden kann, wobei die Prüfung abhängig von jeweils komponentenspezifischen Regeln auf Informationen basiert, welche zu der Komponente in dem Verzeichnis vorliegen. In dem Verzeichnis ist eine zusätzliche Angabe über ein Geräteprofil hinterlegt, welche für die zu prüfende Komponente jeweils eine gültige Prüfungs-Regel angibt, anhand derer die Prüfung erfolgt oder ein geeignetes Zertifikat erzeugt wird.

Weitere vorteilhafte Ausführungsformen sind in den Unteransprüchen angegeben.

Die Erfindung wird weiterhin dargestellt durch die beigefügten Figuren. Dabei zeigen
Figur 1 ein Zertifikatsmanagementsystem mit internem Inventory,
Figur 2 ein Zertifikatsmanagement mit externem Inventory,
Figur 3 beispielhaft die Validierung eines Zertifikatantrages durch die RA anhand der Seriennummer als Device ID, und
Figur 4 die Validierung eines Zertifikatantrages durch die RA anhand der gemäß einer entsprechenden Device ID Profile zusammengesetzten / bestimmten Device ID

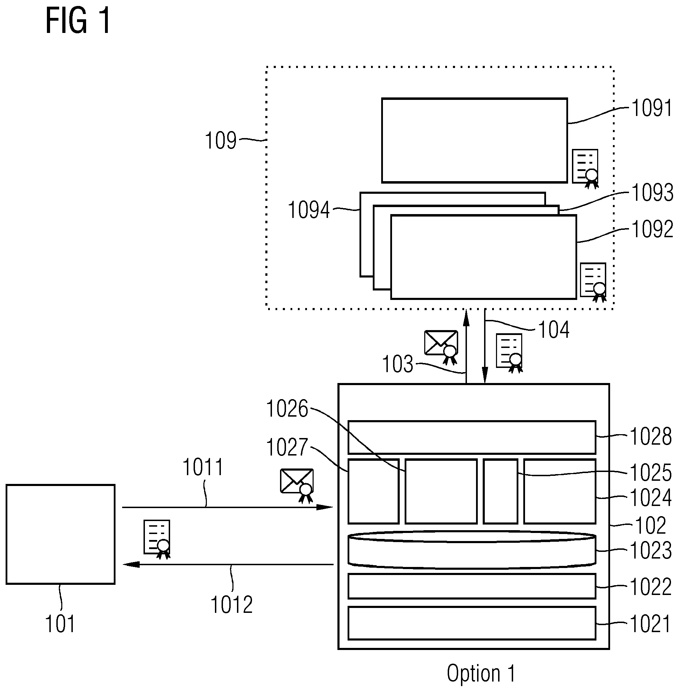

Figur 1 zeigt ein System für Zertifikatsmanagement, mit einer Certificate Authority CA Hierarchy, 109, welche eine Root CA, 1091 und Issuing CAs 1092, 1093, 1094 enthält. Diese steht in Verbindung mit dem Zertifikatsmanagement, Registration Authority RA, 102 welche als Konfiguration mit der erfindungsgemäßen neue Prüfungsregel, 1026, enthält und beispielhaft diverse Module weitere wie CMP Client / PKI Library, 1028, Web UI, 1027, Logfiles, 1025, TLS Server/Client, 1024, das Inventory, 1023, einen Windows Certificate / Key Store, 1022 und einen CMP Server / Key Store, 1021. An diese Registration Authority RA stellt das Gerät 101 eine Zertifikatsanfrage (Certificate Request) 1011 und erwartet als Antwort ein passendes Zertifikat 1012.

Die Idee der vorliegenden Erfindung besteht darin, die Konfiguration der Registration Authority RA bzw. der Instanz, die deren Aufgaben in einer industriellen Anlage übernimmt durch (dynamisch) konfigurierbare neue Prüfungsregel, Device ID Profile zu ergänzen und bei der Aufnahme einer Anlagenkomponente in das Verzeichnis / Inventory:
- dieser Komponente entweder eine bereits konfigurierte neue Prüfungsregel, Device ID Profile vollautomatisiert (z. B. basierend auf einer für den Typ der Komponente vorkonfigurierten Regel) oder manuell durch den zuständigen Benutzer (anhand einer Entscheidung/Vorgabe, gemäß der Benutzer handelt) zugewiesen bekommt,
- oder den zuständigen Benutzer im laufenden Betrieb die Regeln zum Bilden der neue Prüfungsregel Device ID definieren zu lassen, anhand deren (ggf. zu einem späteren Zeitpunkt, unter Berücksichtigung von einer größeren Anzahl von Benutzereingaben und basierend auf Machine Learning) ein zusätzliches neue Prüfungsregel, Device ID Profil dynamisch konfiguriert werden kann.

Des Weiteren besteht die Idee der vorliegenden Erfindung darin, die (wie oben beschrieben) vorkonfigurierten oder zur Laufzeit (auf Basis der Benutzereingaben) dynamisch konfigurierten Device ID Profile bei der Validierung der Zertifikatsanträge zu berücksichtigen.

Bei der Validierung eines Zertifikatsantrags, den die Registration Authority RA von einer Anlagenkomponente erhalten hat, bestimmt die Registration Authority RA anhand des dieser Anlagenkomponente zugeordneten neue Prüfungsregel Device ID Profils,
an welcher Stelle (bzw. in welcher Spalte der oben exemplarisch veranschaulichten Tabelle) sie diese neue Prüfungsregel Device ID im Verzeichnis / Inventory suchen muss und wie sie diese gegebenenfalls aus mehreren Bestandteilen (z. B. der Seriennummer und der MLFB) zusammensetzen muss. Das beschriebene Problem wird dadurch gelöst, indem die Registration Authority RA dazu befähigt wird, bei der Validierung der Zertifikatseinträge in einer heterogenen industriellen Anlage verschiedene neue Prüfungsregel Device IDs zu behandeln.

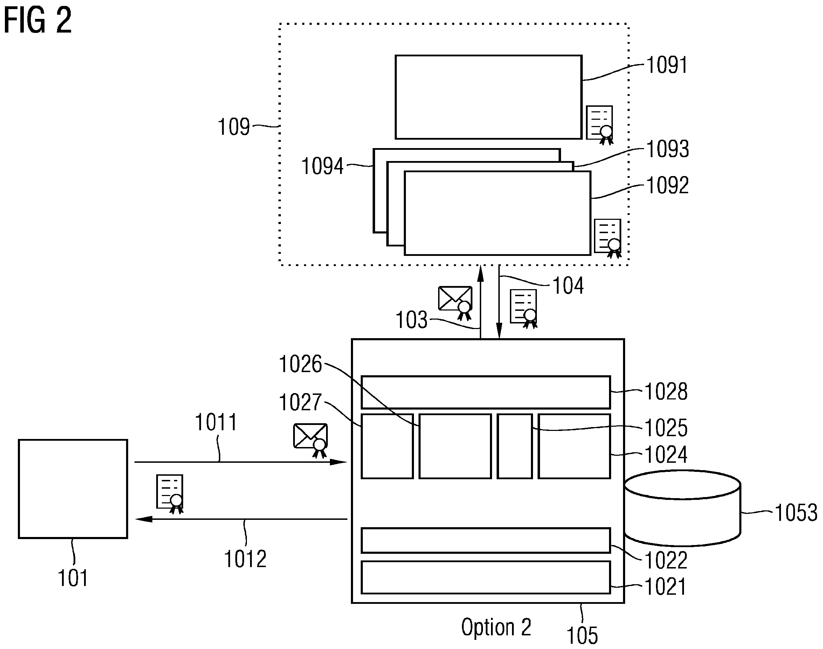

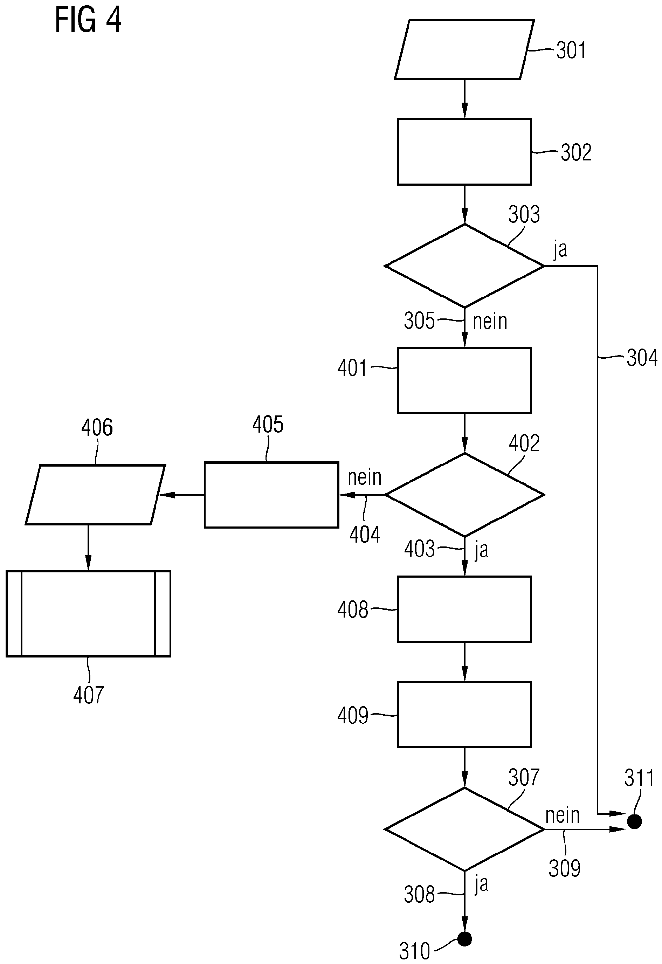

Im Folgenden werden die zur Umsetzung der Idee erforderlichen technischen Merkmale detailliert erläutert und in zwei Tabellen und den Figuren 2 und 4 veranschaulicht.

Erfindungsgemäß wird die Konfiguration der Registration Authority RA durch die neue Prüfungsregel Device ID Profile erweitert. Dies kann beispielsweise über ein Template oder direkt in einer JSON- oder einer XML-Datei konfiguriert werden. Pro neue Prüfungsregel Device ID Profil werden insbesondere die Regeln dafür definiert,
- wie eine derartige ID zusammengesetzt/ gebildet wird, sowie
- wie die Zuordnung von dem jeweiligen Profil zu den bestimmten Geräten erfolgen soll.

Siehe dazu die exemplarische Darstellung in der folgenden Tabelle: Konfiguration der Device ID Profile (Beispiel)

| Device ID Profile me Name | Device ID Regel | Zuweisungsregel(n) |
|---|---|---|
| Siemens SIMATIC CPU Device ID | Device ID = (Serial Number II MLFB) | (Device Name = SIMATIC S7-*) && (Hersteller = Siemens AG) |
| OPC UA Part 21 Device ID | Device ID = Product Instance URI | MDC enthält (SAN = Product Instance URI) |
| IEEE 802.1.AR Device ID | Device ID = Serial Number | Explizite Zuweisung durch Verwendung / z. B. basierend auf Machine Learning |
| ... | | |
| ... | | |

Die Zuordnungsregeln und Device ID Regeln können jederzeit dynamisch geändert werden. Auch ist dies jederzeit möglich, einer Anlagenkomponente ein anderes Device ID Profil dynamisch - entweder automatisiert (z. B. im Rahmen der Provisionierung) oder manuell (z. B. durch den Benutzer) - zuzuweisen.

Beispielsweise unterstützt eine Anlagenkomponente aktuell zwar OPC UA, jedoch (noch) nicht die OPC UA Spec. Teil 21 und die in diesem Teil definierte Product Instance URI.

Deswegen kann diese Anlagenkomponente aktuell beispielsweise das Device ID Profil "Siemens SIMATIC CPU Device ID" oder "IEEE 802.1.AR Device ID" nutzen. Sobald jedoch die Unterstützung des Teil 21 umgesetzt ist, kann der Anlagenkomponente das Device ID Profil "OPC UA Part 21 Device ID" zugewiesen werden.

In einer zweiten vorteilhaften Ausführungsform wird das Verzeichnis / Inventory der Anlage durch eine zusätzliche Spalte "Device ID Profile" erweitert, welche die neue Prüfungsregel angibt. Um die Zuweisung der Device ID Profile zu den Anlagenkomponenten zu flexibilisieren und transparent zu veranschaulichen, welcher Anlagenkomponente welches Device ID Profil zugewiesen wird. Je nach Komponente bzw. nach den entsprechenden Zuweisungsregeln (engl. "Assignment Rules") können die Inhalte der Spalte änderbar durch den berechtigten Benutzer oder nicht änderbar ("Read Only") sein. Siehe dazu die exemplarische Darstellung in der nachfolgenden Tabelle, welche beispielhaft ein durch die Anzeige und Zuweisung der Device ID Profile erweitertes Verzeichnis / Inventory darstellt, basierend auf der Tabelle oben.

| Nr | Geräte Name | Hersteller | Seriennummer | MLFB | Product Instance URI | MDC | CDC | OC | Device ID Profile |
|---|---|---|---|---|---|---|---|---|---|
| 1 | Simatic S7-1500 | S AG | 875gcb8965 | 6ES7144-1FB31-OXBO-Z | 234t 56z 88 | 12... | | | Siem. SIEMATIC CPU Device ID |
| 2 | Simatic S7-4100 | S AG | 975-g987621 | 97432144-1FB31-OXBO-Z | - | 98.... | | | Siem. SIEMATIC CPU Device ID |
| 3 | Cisco Device | Cisco | 87634gtz986 | | - | ... () | | | IEEE 802.1 AR Device ID |
| 4 | IoT Device | XYZ | tzq9845 | | - | oo... | | | OPC UA Part 21 Device ID |
| 5 | Switch | ABC | tzq9845 | | - | ii... | | | |

Im dem Fall, dass ein berechtigter Benutzer die Zuweisung von den vorkonfigurierten oder zur Laufzeit angelegten/ konfigurierten Profilen zu bestimmten Anlagenkomponenten vornehmen darf, bietet es sich programmtechnisch an, diese Auswahl in Form einer Dropdown-Liste dem Benutzer anzubieten.

Eine weitere vorteilhafte Ausführungsform, berücksichtigt die Registration Authority RA bei der Validierung der Zertifikatsanträge die oben erläuterten Device ID Profile, wobei sie zuerst anhand der oben eingeführten Zuordnungsregeln (Assignment Rules) prüft, ob ein entsprechendes Profil bereits konfiguriert wurde. Falls ein derartiges Profil bereits existiert, nutzt die Registration Authority RA dieses Profil sofort zur Bestimmung/Zusammensetzung der Device ID. Andernfalls wird der Benutzer dazu aufgefordert, die Frage zu beantworten, welches Device ID Profil verwendet werden soll oder wie die Device ID bestimmt oder zusammengesetzt werden soll. Dieses Vorgehen ist auch im Ablaufdiagramm der Figur 4 detailliert aufgezeigt. Dazu kann der Benutzer Vorschläge von der Registration Authority RA erhalten. In einer vorteilhaften Ausführungsform können Machine Learning-/KI-Methoden verwendet werden, um aus einzelnen Entscheidungen/Eingaben der zuständigen Benutzer Rückschlüsse auf die bestehenden oder neu anzulegenden Prüfungsregeln / Device ID Profile zu schließen.

Siehe dazu auch die beispielhafte Darstellung des Validierungsablaufs in Figur 4, insbesondere in Vergleich zu dem oben diskutieren Ablauf in Figur 3.

Das auf beschriebene Art und Weise angelegte / aufgebaute Verzeichnis / Inventory wird im Anlagenkontext unter anderem von der Registration Authority RA bei der Validierung der eingehenden Zertifikats- und Revokationsanträge benutzt. Insbesondere bei der initialen Beantragung der Kundenzertifikate, signiert mit einem signing Certificate, z. B. MDC 301 (engl. Customer Device Certificates, CDC), die die Anlagenkomponenten an die Anlage binden sollen und die Basis für die Beantragung weiterer applikationsspezifischer Zertifikate (Operational Certificates, OC) bilden sollen, prüft die Registration Authority RA, ob der eingehende Zertifikatsantrag von einer Komponente kommt, die im Verzeichnis / Inventory bereits enthalten ist und die somit bereits auf eine adäquate Art und Weise geprüft wurde und Zertifikate im Kontext der Anlage beantragen darf, 302.

Zusätzlich validiert die Registration Authority RA die Signatur des Zertifikatsantrags unter Verwendung des zum Signieren verwendeten Signing Certificate, dessen Rolle bei der CDC-Beantragung in der Regel das zugehörige Manufacturer Device Certificate, MDC, spielt. Bei der Prüfung in Rücksprache mit dem Verzeichnis / Inventory berücksichtigt die Registration Authority RA insbesondere die sogenannte Device ID, die sowohl im entsprechenden Verzeichnis / Inventory-Eintrag als auch im Zertifikatseintrag und in dem zum Signieren des Eintrags verwendeten (und ebenfalls im Verzeichnis / Inventory-Eintrag enthaltenen) Zertifikats (z. B. des Manufacturer Device Certificate MDC) enthalten ist.

Wenn der Zertifikatsantrag nicht zum Signing Certificate (z. B. MDC) passt, 304, dann ist die Validierung fehlgeschlagen, 311. Soweit stimmt der Vorgang noch mit dem in Figur 3 beschriebenen Vorgehensweise überein.

Anderenfalls, 305, wird anhand der bestehenden Assignments geprüft, (z. B. anhand Gerätename und Hersteller), ob bereits ein Device ID Profil für diese Kombination konfiguriert ist, 401. Sofern ein passendes Device ID Profil gefunden wird (Device ID, Profil X), 402, 403, wird die Device ID im Zertifikatsantrag / Signing Certificate gemäß dem ermittelten Device ID, Profil X bestimmt, 408.

Ein Beispiel wäre Device ID = Seriennummer | | MLFB oder Device ID = Product Instance URI.

Dann wird der Inventory Eintrag mit der ermittelnten Device ID gesucht, 409. Die Validierung ist erfolgreich, wenn der entsprechende Eintrag gefunden wurde, 307, 308. Anderenfalls, 309, ist die Validierung fehlgeschlagen.

Wenn bei der Prüfung nach einem passenden Profil, 402, kein Profil ermittelt werden kann, 404, dann könnte ein passendes Profil ermittelt oder ein neues Profil erstellt werden, 405 über eine Benutzereingabe, 406. Diese Benutzereingabe wird dann einem bestehenden oder neu angelegten DeviceID Profil zugeordnet, ggf. auch erst nach einer bestimmten Anzahl von Eingaben oder unter Zuhilfenahme von Machine Learning, KI, 407. Sobald das neue Profil solcherart angelegt ist, kann dann zurück in das zurück in das Inventory gespeichert.

Durch das beschriebene Verfahren wird es ermöglicht, dass die Registration Authority RA in einer heterogenen Anlage - trotz der verschiedenen (sich ggf. dynamisch verändernder) Vorgaben / Festlegungen hinsichtlich der Device ID bei Anlagenkomponenten, die von verschiedenen Herstellern kommen können - alle eingehenden Zertifikatsanträge validieren kann. Die zu diesem Zweck eingeführten Zertifikatsprofile können dabei statisch / vorkonfigurierbar sein und / oder zur Laufzeit - basierend auf den Benutzereingaben/Entscheidungen und ML-/KI-Methoden - dynamisch konfigurierbar sein.

Daraus wird vorteilhaft ein fundierter Beitrag zur störungsfreien Aufrechterhaltung des Normalbetriebs und zur Schutzverbesserung verfahrenstechnischer Anlagen in deren Lebenszyklus geliefert. Denn die Registration Authority RA kann stets dynamisch durch neue Zuweisungsregeln und PrüfungsRegeln / Device ID Profile erweitert werden, so dass sie stets in der Lage ist, Zertifikatsanträge zu validieren, ohne dass die Registration Authority RA-Software stets durch neue Fallunterscheidung ("if...then") aufwendig erweitert werden muss, um Ausnahmen vorzubeugen.

Eine Optimierung und Flexibilisierung des automatisierten Zertifikatsmanagements wird erreicht.

Das vorgeschlagene Verfahren leistet einen wesentlichen Beitrag zur Erfüllung der PKI-bezogenen Anforderungen der IEC 62443 und damit auch zur besseren Interoperabilität und Usability, denn alle Anlagenkomponenten einer heterogenen (ggf. Brownfield) Anlage können nun in das Zertifikatsmanagement eingebunden werden. Es sollen lediglich die geeigneten Device ID Profile vorhanden sein oder dynamisch konfiguriert werden.

## Patentansprüche

1. Verfahren für ein Zertifikatsmanagement für heterogene Anlagen, wobei die Anlage aus zumindest zwei Komponenten besteht und
eine Zertifikatsverwaltung (102) Informationen über die Komponenten in einem Verzeichnis speichert (1026), und
die Zertifikatsverwaltung von jeder Komponente einen Antrag auf ein Zertifikat für den Betrieb und/oder die Kommunikation erhält, und nach Prüfung des Antrages entscheidet, ob ein Zertifikat erteilt oder bestätigt werden kann,
wobei die Prüfung abhängig von jeweils komponentenspezifischen Regeln auf Informationen basiert, welche zu der Komponente in dem Verzeichnis vorliegen
**dadurch gekennzeichnet, dass**
in dem Verzeichnis eine zusätzliche Angabe (1026) über ein Geräteprofil (1023) hinterlegt ist, welche für die zu prüfende Komponente jeweils eine gültige Prüfungs-Regel angibt, anhand derer die Prüfung erfolgt oder ein geeignetes Zertifikat erzeugt wird.

2. Verfahren gemäß den Merkmalen des Patentanspruchs 1, **dadurch gekennzeichnet, dass**
eine, die heterogene Anlage bildenden erste Komponenten erste komponentenspezifischen Regeln für die Bildung und Prüfung von Zertifikaten verwendet, und zumindest eine zweite Komponente zweite, von den ersten verschiedene, komponentenspezifischen Regeln für die Bildung und Prüfung von Zertifikaten verwendet.

3. Verfahren gemäß den Merkmalen des Patentanspruchs 1 oder 2, **dadurch gekennzeichnet, dass**
die komponentenspezifischen Regeln abhängig von protokollspezifischen Vorgaben sind.

4. Verfahren gemäß den Merkmalen des Patentanspruchs 3, **dadurch gekennzeichnet, dass**
die protokollspezifischen Vorgaben sich aus das Protokoll IEEE 802.1AR oder aus der OPC UA Spezifikation ergeben.

5. Verfahren gemäß einem der vorherigen Patentansprüche, **dadurch gekennzeichnet, dass**
die Informationen über die Komponenten zumindest eine der folgenden Informationen umfassen:
- Gerätename der Komponente
- Hersteller der Komponente
- Seriennummer der Komponente
- Maschinen-Lesbare Fabrikate-Bezeichnung MLFB
- Product Instance URI.

6. Verfahren gemäß einem der vorherigen Patentansprüche, **dadurch gekennzeichnet, dass**
die Prüfungs-Regel, anhand derer die Prüfung erfolgt, basierend auf den protokollspezifischen Regeln gebildet ist,
- aus welchen Informationen eine Prüfungsregel zusammengesetzt oder gebildet wird, und
- wie die Zuordnung von dem jeweiligen Prüfungsregel zu der bestimmten Komponente erfolgen soll.

7. Verfahren gemäß einem der vorherigen Ansprüche,
**dadurch gekennzeichnet, dass**
in dem Verzeichnis eine zusätzliche Angabe (1026) im Geräteprofil (1023) fehlt, welche für die zu prüfende Komponente jeweils eine gültige Prüfungs-Regel angibt und
eine vorkonfigurierte Prüfungs-Regel zugeordnet wird.

8. Computersystem für ein Zertifikatsmanagement für heterogene Anlagen, wobei die Anlage aus zumindest zwei Komponenten besteht
mit einer Zertifikatsverwaltung (102) und
mit einem Verzeichnis-Speicher (1023) für Informationen über die Komponenten (1026), wobei
die Zertifikatsverwaltung (102) eingerichtet ist, von jeder Komponente einen Antrag auf ein Zertifikat für den Betrieb und/oder die Kommunikation zu empfangen, und
eingerichtet ist, eine Prüfung durchzuführen zur Entscheidung über den Antrag, für den Zweck der Erteilung oder Bestätigung eines Zertifikats,
wobei die Prüfung abhängig von jeweils komponentenspezifischen Regeln auf Informationen basiert, welche zu der Komponente in dem Verzeichnis-Speicher (1023) vorliegen **dadurch gekennzeichnet, dass**
in dem Verzeichnis-Speicher eine zusätzliche Angabe (1026) über ein Geräteprofil hinterlegt ist, welche für die zu prüfende Komponente jeweils eine gültige Prüfungs-Regel angibt, anhand derer die Prüfung erfolgt oder ein geeignetes Zertifikat erzeugt wird.

9. Computersystem gemäß Patentanspruch 8,
**dadurch gekennzeichnet, dass**
der Verzeichnisspeicher (1053) eine eigenständige, von der Zertifikatsverwaltung (102) getrennte Baueinheit ist.

10. Computerprogrammprodukt für ein Zertifikatsmanagement für heterogene Anlagen, zur Ausführung der Verfahrensschritte gemäß einem der Patentansprüche 1 bis 7.
